# EUROPÄISCHE PATENTANMELDUNG

(11) **EP 2 153 928 A1**
(43) Veröffentlichungstag der Anmeldung: **17.02.2010**
(21) Anmeldenummer: 09166829.3
(22) Anmeldetag: 30.07.2009
(51) Int. Cl.: B23K 26/14, B23K 26/16, B23K 26/08, B21D 28/02, B23P 23/04, B23Q 39/02, B23K 26/36, B23K 26/40

(54) **Stanz- und Beschnittvorrichtung für Kunststoffbauteile mit einem einer Lasereinrichtung zugeordeneten Roboter**

(30) Priorität: 13.08.2008 DE 102008038988
(71) Anmelder: KraussMaffei Technologies GmbH, 80997 München (DE)
(72) Erfinder: Hafer, Udo, 58453 Witten (DE)
(74) Vertreter: Zollner, Richard

(57) **Zusammenfassung**

Die vorliegende Erfindung betrifft eine Stanz- und Beschnittvorrichtung für Kunststoffbauteile umfassend eine in einem Gehäuse angeordnete Stanzvorrichtung mit einem Stanzwerkzeug-Unterteil (14) und einem relativ dazu beweglichen Stanzwerkzeug-Oberteil (16) sowie einem Antrieb zum Beaufschlagen des Stanzwerkzeug-Unterteils (14) und/oder des Stanzwerkzeug-Oberteils (16) und einer Robotvorrichtung, an deren Robotarm (22) eine Laservorrichtung (24) angeordnet ist.

Um eine toleranzsichere jedoch kostengünstige Bearbeitungsstation zur Verfügung zu stellen, wird vorgeschlagen, dass die Robotvorrichtung derart angeordnet und ausgebildet ist, um in den Stanzbereich des geöffneten Stanzwerkzeuges (16) einfahren zu können.

## Beschreibung

Die vorliegende Erfindung betrifft eine Stanz- und Beschnittvorrichtung für Kunststoffbauteile gemäß dem Oberbegriff des Anspruchs 1.

Mehrschichtige Kunststoffaufbauten, die beispielsweise im Automobilinterieurbereich Anwendung finden, bestehen regelmäßig aus einem sogenannten Träger aus einem Kunststoffmaterial, darüber einer Schicht aus einem halbharten Polyurethanschaum und abschließend einer dekorativen Oberflächenschicht aus einem dünnen Kunststoffmaterial auf der Sichtseite. Beim Fertigungsvorgang eines solchen mehrschichtigen Kunststoffbauteils werden die verschiedenen Schichten nacheinander aufgebaut oder aufgebracht. Nachdem ein solches mehrschichtige Kunststoffbauteil als Halbzeug gefertigt ist, müssen in der Regel dessen Ränder zumindest teilweise beschnitten und Öffnungen eingebracht werden.

Dieser Beschnittvorgang wird heute in der Regel mit Stanzwerkzeugen, mit Fräswerkzeugen oder mit einer Kombination von beiden Verfahren durchgeführt. In seltenen Fällen kommen auch Laserschneid-Verfahren oder ein Wasserstrahlschneiden zur Anwendung.

Bei der Durchführung von verschiedenen Arbeitsschritten zum Beschneiden des Halbfertigproduktes erfolgen diese Schritte in der Regel nacheinander in unterschiedlichen Arbeitsstationen. Dass dies so ist, hat in der Regel mit komplexen geometrischen Formen der Teile oder der Beschnitte zu tun, was den Stanzbeschnitt in einem einzigen Arbeitsschritt in der Regel unmöglich macht. Aus diesem Grunde kommt nach einem Stanzschritt daher zumeist ein flexibles Beschnitt-Verfahren zum Einsatz, um das Halbzeug fertig zu stellen und Öffnungen bzw. Ausnehmungen in das mehrschichtige Kunststoffbauteil einzubringen.

Nach einem ersten Stanzbeschnitt könnte auch der zweite Schritt ein Stanzschnitt sein. In vielen Fällen wird aber als zweiter Arbeitsschritt ein Frässchnitt angewandt um Bereich zu bearbeiten, die sich aus geometrischen Gründen nicht stanzen lassen.

Wird nach einem Stanzvorgang ein Frässchritt durchgeführt, so ist fertigungsgemäß nachfolgend der Stanzanlage in der Regel eine hydraulisch angetriebene Maschine mit einer Fräszelle vorgesehen, in welcher das vorher gestanzte Kunststoffbauteil - nach der Entnahme aus der ersten Station - eingelegt und nachbearbeitet wird. Zu diesem Zweck muss das Kunststoffbauteil aus der ersten Produktaufnahme entnommen und für den zweiten Schritt in die Fräszelle eingelegt werden. Dies bedingt jedoch eine Addition der verschiedenen Toleranzen, was insgesamt eine Gesamttoleranz ergibt, die in vielen Fällen nicht mehr akzeptabel ist. Insbesondere ist es problematisch, dass der zweite Beschnitt mit einer Toleranz zum ersten Beschnitt erzeugt wird.

Eine vorliegend in Erwägung gezogene Möglichkeit, die Addition von verschiedenen Toleranzen zu vermeiden, wird darin gesehen, das vorher gestanzte Kunststoffbauteil nicht umzusetzen, sondern in der Stanzpresse direkt nachzubearbeiten. Dazu könnte man an die Stanzmaschine direkt einen Fräsroboter anbauen, der die im ersten Stanzvorgang nicht stanzbaren Bereiche unmittelbar nachfräst. Jedoch fallen bei diesem Vorgang unvermeidbar Späne an, welche sich sammeln und einen präzisen Stanzbeschnitt eines nachfolgenden Bauteils in der gleichen Stanzpresse unmöglich machen.

Aufgabe der vorliegenden Erfindung ist es, eine Stanz- und Beschnittvorrichtung anzugeben, bei der auch bei komplexen Bearbeitungsgeometrien die gewünschten Toleranzen dauerhaft eingehalten werden können.

Diese Aufgabe wird durch die im Anspruch 1 genannten Merkmale gelöst.

Demgemäß wird bei einer Stanz- und Beschnittvorrichtung mit einer in einem Gehäuse angeordneten Stanzpresse gleichzeitig eine Robotvorrichtung verwendet, an deren Robotarm eine Laservorrichtung angeordnet ist. Erfindungsgemäß ist diese Robotvorrichtung so positioniert und ausgebildet, dass die Laservorrichtung in den Stanzbereich des geöffneten Stanzwerkzeuges einfahren und den Beschnittvorgang auch komplexer Geometrien spanfrei durchführen kann. Anstelle des spanhebenden Fräsverfahrens wird also ein berührungsloses Laserschneid-verfahren eingesetzt. Vorzugsweise wird dabei ein CO₂-Laser verwendet.

Allerdings entstehen beim Laserbeschnitt von Kunststoffdämpfe, welche vorteilhafterweise abgesaugt und gereinigt werden sollten. Zu diesem Zweck ist es vorzugsweise vorgesehen, die Stanz- und Beschnittvorrichtung, insbesondere die Stanzpresse, mit einer Absaugvorrichtung zu versehen, welche die entstehenden Dämpfe entfernt. Die Absaugvorrichtung kann dabei im Gehäuse der Stanzpresse beispielsweise im unteren und/oder oberen Bereich angeordnet sein. Überdies können Luftführungen so vorgesehen werden, dass in den Beschnittregionen die dabei entstehenden Dämpfe unmittelbar absaugbar sind. Insbesondere ist dabei die Produktaufnahme während des Stanzschrittes hervorragend zum Absaugen selbst geeignet.

Zum Schutz der Bediener sollte das Gehäuse um die Stanz- und Beschnittvorrichtung während des Laserns mit einer lichtdichten Abschirmung versehen sein. Da der Bediener jedoch bereits beim Stanzprozess gegen die von der Maschine ausgehende Gefahr geschützt werden muss, stellt diese Lichtabschottung keinen Mehraufwand dar. Es ist lediglich darauf zu achten, dass auch eventuelle Öffnungen mit Türen versehen werden, die eine entsprechend lichtdichte Abschirmung gewährleisten.

Damit bietet die erfindungsgemäße Vorrichtung zwei wesentliche Vorteile. Zum einen kann auf den Umlegevorgang für einen nachfolgenden Beschnitt verzichtet werden, was mit einer Einsparung einer zusätzlichen Handlingseinrichtung einhergeht. Zum anderen wird der Laserbeschnitt immer auf der gleichen Aufspannung wie der erste Beschnitt (insbesondere der erste Stanzvorgang) erfolgen, so dass sich keine Toleranzen durch das Umsetzen zu einer größeren Gesamttoleranz addieren.

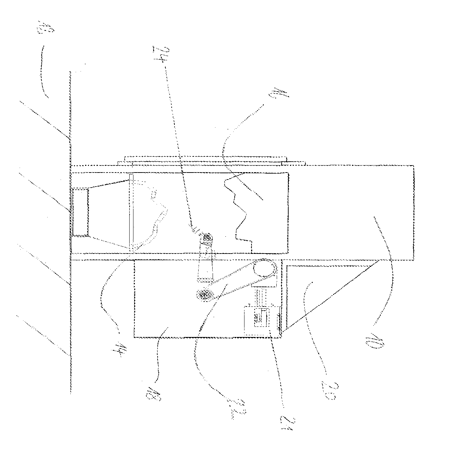

Die vorliegende Erfindung wird nachfolgend auch hinsichtlich weiterer Vorteile und Merkmale mit Bezug auf die beiliegenden Zeichnungen näher erläutert. Die einzige Zeichnung zeigt eine schematische Darstellung einer erfindungsgemäßen Stanz- und Beschnittvorrichtung.

Die erfindungsgemäße Stanz- und Beschnittvorrichtung gemäß dem Ausführungsbeispiel weist ein Gehäuse für eine Stanzpresse 10 auf, in der ein Stanzwerkzeug-Unterteil fest über eine Abstützung auf dem Fundament 12 des Bodens und in dem Gehäuse gehalten ist. Auf dem gleichen Fundament ist auch das Gehäuse der Stanzpresse 10 selbst angeordnet.

Oberhalb des Stanzwerkzeug-Unterteils 14 ist ein in Vertikalrichtung durch einen - nicht dargestellten - Antrieb betätigbares Stanzwerkzeug-Oberteil 16 angeordnet, welches durch Verfahren gegen das Stanzwerkzeug-Unterteil 14 ein dazwischen aufgenommenes Mehrschicht-Kunststoffprodukt in einem Stanzvorgang bearbeitet. Diese Vorrichtungen sind in der Regel bekannt und brauchen nicht weiter erläutert zu werden. An der Rückseite des Gehäuses der Stanzpresse 10 (in der Figur rechts dargestellt) ist ein weiteres Gehäuse 18 angeordnet, welches über einen Befestigungsflansch 20 an dem Gehäuse der Stanzpresse 10 befestigt ist.

In diesem Gehäuse 18 ist ein Mehrachsrobotarm 22 (vorliegend ein 5- oder 6-Achs-Roboter) aufgenommen und gehalten, dessen einzelne Bewegungselemente in an sich bekannter Weise mittels entsprechender Antriebe betätigt werden können. Mit der Bezugsziffer 21 ist einer der Antriebe konkret dargestellt.

Über eine Öffnung an der Rückseite des Gehäuses der Stanzpresse 10 kann der Robotarm 22, an dessen Spitze eine Laservorrichtung 24 mit einem CO₂-Laser angeordnet ist, in den Bereich der Stanzpresse verfahren werden, wie dies aus der Figur ersichtlich ist. Entsprechend der Ausgestaltung des Robotarms kann dieser über den ganzen Bereich des Stanzwerkzeug-Unterteils verfahren und verschwenkt werden und dabei auch die Laservorrichtung entsprechend positionieren, so dass jeglicher gewünschter Laserbeschnitt auch mit den komplexesten Geometrien durchführbar ist.

Beim Betrieb der vorliegenden erfindungsgemäßen Stanz- und Beschnittvorrichtung wird zunächst ein hergestelltes Halbfertigprodukt in Form eines mehrschichtigen Kunststoffaufbaus in das geöffnete Stanzwerkzeug eingelegt, insbesondere auf das Stanzwerkzeug-Unterteil aufgelegt, was beispielsweise durch einen nicht dargestellten Handlingsarm erreicht werden kann.

Anschließend wird die Stanzpresse 10 betätigt und das Stanzwerkzeug-Oberteil 16 entsprechend angetrieben abgesenkt, so dass der Stanzvorgang durchgeführt wird. Dabei ist der Robotarm 22 vollständig in sein Gehäuse zurück verfahren und ragt nicht in das Gehäuse der Stanzpresse 10 hinein.

Nach dem anschließenden Öffnen des Stanzwerkzeugs kann der Robotarm 22 in programmierter Weise betrieben werden und Beschnitte nach vorgegebenen Geometrien durchführen. Die dabei entstehenden Dämpfe werden mittels einer nicht dargestellten Absauganlage abgesaugt und später gereinigt. Nach dem Durchführen des Beschnittes wird der Robotarm 22 wieder in sein Gehäuse 18 zurück gezogen und das nunmehr fertig gestellte Mehrschicht-Kunststoffformteil kann der Stanz- und Beschnittvorrichtung entnommen werden. In dieser Position ist die Vorrichtung wieder bereit zur Aufnahme eines neuen Halbfertigproduktes.

### Bezugszeichenliste

- 10: Stanzpresse
- 12: Boden
- 14: Stanzwerkzeug, Unterteil
- 16: Stanzwerkzeug, Oberteil
- 18: Gehäuse für Laserroboter
- 20: Befestigungsflansch
- 21: Robotantrieb
- 22: Robotarm
- 24: Laservorrichtung

## Patentansprüche

1. Stanz- und Beschnittvorrichtung für Kunststoffbauteile umfassend
- eine in einem Gehäuse angeordnete Stanzpresse (10) mit
- - einem Stanzwerkzeug-Unterteil (14) und
- - einem relativ dazu beweglichen Stanzwerkzeug-Oberteil (16) sowie
- - einem Antrieb zum Beaufschlagen des Stanzwerkzeug-Unterteils (14) und/oder des Stanzwerkzeug-Oberteils (16) und
- einer Robotvorrichtung, an deren Robotarm (22) eine Laservorrichtung (24) angeordnet ist,
**dadurch gekennzeichnet,**
**dass** die Robotvorrichtung derart angeordnet und ausgebildet ist, um in den Stanzbereich des geöffneten Stanzwerkzeuges einfahren zu können.

2. Stanz- und Beschnittvorrichtung nach Anspruch 1,
**dadurch gekennzeichnet,**
**dass** eine Absaugvorrichtung vorgesehen ist, um die durch den Laserbeschnitt entstehenden Dämpfe abzusaugen.

3. Stanz- und Beschnittvorrichtung nach Anspruch 2,
**dadurch gekennzeichnet,**
**dass** die Absaugvorrichtung in dem Gehäuse der Stanzpresse (10) angeordnet ist.

4. Stanz- und Beschnittvorrichtung nach Anspruch 1 oder 2,
**dadurch gekennzeichnet,**
**dass** als Laser ein CO₂-Laser vorgesehen ist.

5. Stanz- und Beschnittvorrichtung nach einem der Ansprüche 1 bis 3,
**dadurch gekennzeichnet,**
**dass** das Gehäuse der Stanzpresse (10) zumindest teilweise mit lichtdichten Abschirmungen versehen ist.

6. Stanz- und Beschnittvorrichtung nach einem der vorhergehenden Ansprüche,
**dadurch gekennzeichnet,**
**dass** die Laservorrichtung an einer Gehäusewand angeordnet ist und vorzugsweise durch eine Öffnung des Gehäuses in den Bereich zwischen den geöffneten Stanzwerkzeugteilen eingreifen kann.
